# EUROPEAN PATENT APPLICATION

(11) **EP 2 383 032 A1**
(43) Date of publication of application: **02.11.2011**
(21) Application number: 11171560.3
(22) Date of filing: 25.11.2009
(51) Int. Cl.: B01J 2/20, C10L 5/44, F26B 17/20, B30B 11/00, B30B 11/28

(54) **A pellet forming system**

(30) Priority: 25.11.2008 IE 20080937
(62) Divisional of application: 09764718.4
(71) Applicant: Kerry Biomass Technology Limited, County Kerry (IE)
(72) Inventor: O'Connor, Liam, Killarney, Kerry (IE); O'Connor, Hugh, Killarney, Kerry (IE)
(74) Representative: O'Neill, Brian

(57) **Abstract**

The present invention relates to a pellet forming system, in particular for producing biomass or wood pellets for use in wood fired boilers or the like, the system comprising means for both forming the pellets from pulped wood/biomass and means for pre-processing the wood and/or other biomass to be formed into the pellets, wherein the pellet forming system comprises a rotatable drum having a reticulated outer wall, and a number of smaller rollers which bear against the outer wall of the drum in order to press biomass deposited onto the drum through the reticulations in order to form pellets.

## Description

### Field of the invention

This invention relates to a pellet forming system, in particular for producing biomass or wood pellets for use in wood fired boilers or the like, the system comprising means for both forming the pellets from pulped wood/biomass and means for pre-processing the wood and/or other biomass to be formed into the pellets.

### Background of the invention

Pellet mill machines are well known, and have to date been predominantly designed for use in producing animal feed or the like, although it is also known to produce wood pellets using such machinery. However the prior art pellet presses suffer from a number of drawbacks, the main issues being high energy requirements, low output per hour and high maintenance costs. Wood pellets are generally formed primarily from saw dust, which can contain around 50% moisture, which must then undergo drying to achieve approximately 10% moisture prior to entering a conventional pellet press. However a good quality wood or biomass pellets should only have approximately 7% to 8% moisture. Removing this moisture is a time and energy intensive process, and if not reduced will generally result in a lower quality wood pellet have a relatively low calorific value.

The present invention has therefore being developed to provide a more efficient, cost effective and higher output method of producing biomass/wood pellets.

### Summary of the invention

According to the present invention there is provided a pellet forming system comprising a pellet forming apparatus having a substantially cylindrical die; and at least one roller positioned externally of the die and engageable thereagainst; wherein one or more operating parameter of the die and/or roller is feedback controlled.

Preferably, the die is rotatable about a longitudinal axis of the die and the at least one roller is rotatable about a longitudinal axis of the roller.

Preferably, the at least one roller is displaceable towards and away from a surface of the die.

Preferably, the system comprises a pressure sensor associated with the at least one roller and operable to monitor the pressure applied by the roller to the surface of the die.

Preferably, the system comprises drive means operable to effect rotation of the die, the drive means enabling variation in the speed of revolution of the die.

Preferably, the system comprises six rollers disposed about the circumference of the die.

Preferably, each roller is independently displaceable towards and away from a surface of the die.

Preferably, the system comprises control means adapted to implement feedback control of the operating parameters of the apparatus.

Preferably, the control means is adapted to implement closed loop feedback control of the apparatus.

Preferably, the system comprises means for dispensing biomass onto the die.

Preferably, the die comprises a reticulated circumferential sidewall through which biomass may be extruded in order to form the pellets.

Preferably, the die defines an interior chamber into which pellets extruded through the die are deposited.

Preferably, the system comprises a biomass processing module upstream of the die which is adapted to process the biomass before being delivered to the die.

Preferably, the biomass processing module comprises at least one chamber having an inlet and an outlet and means for displacing biomass through the chamber from the inlet to the outlet; wherein one or more operating parameter of the processing module is feedback controlled.

Preferably, the biomass processing module comprises at least one heat exchanger in operative association with the chamber and operable to allow temperature control of biomass within the chamber.

Preferably, the biomass processing module comprises means for extracting moisture from within the chamber.

Preferably, the biomass processing module comprises at least one sensor operable to monitor one or more physical and/or chemical properties of biomass entering and/or within and/or exiting the chamber.

Preferably, the at least one sensor comprises an infra-red sensor adapted to measure both temperature and moisture content of the biomass entering and/or within and/or exiting the chamber.

Preferably, the displacing means comprises an auger disposed within the chamber.

Preferably, the extracting means comprises a condenser in fluid communication with the chamber.

Preferably, the chamber is defined by a double walled cylinder between which walls a heat transfer medium may be circulated in order to effect temperature control of the biomass.

Preferably, the chamber includes an opening in an upper portion thereof which communicates with the condenser.

Preferably, data from the or each sensor is utilised to effect closed loop feedback control of one or more of the operating parameters of the processing module.

Preferably, the throughput of the displacing means may be varied.

Preferably, the displacing means forms part of the heat exchanger.

Preferably, heat extracted by the moisture extracting means is utilised by the heat transfer means.

Preferably, the moisture extracting means comprises a hood disposed above the chamber, an array of heat exchange pipes in thermal contact with the hood and through which a heat exchange medium can circulate, and a water runoff circuit adapted to remove condensed water from the hood.

Preferably, the processing module comprises a pair of chambers in series.

### Brief description of the drawings

The present invention will now be described with reference to the accompanying drawings, in which;
Figure 1 illustrates a perspective view of a pellet forming apparatus forming part of the pellet forming system according to an embodiment of the present invention;
Figure 2 illustrates a perspective view of the apparatus shown in figure 1, from the rear thereof;
Figure 3 illustrates an enlarged perspective view of a portion of the apparatus illustrated in figure 1;
Figure 4 illustrates a perspective view of a biomass processing module forming part of the pellet forming system of the present invention;
Figure 5 illustrates an alternative perspective view of the processing module illustrated in figure 4;
Figure 6 illustrates a sectioned end elevation of the processing module;

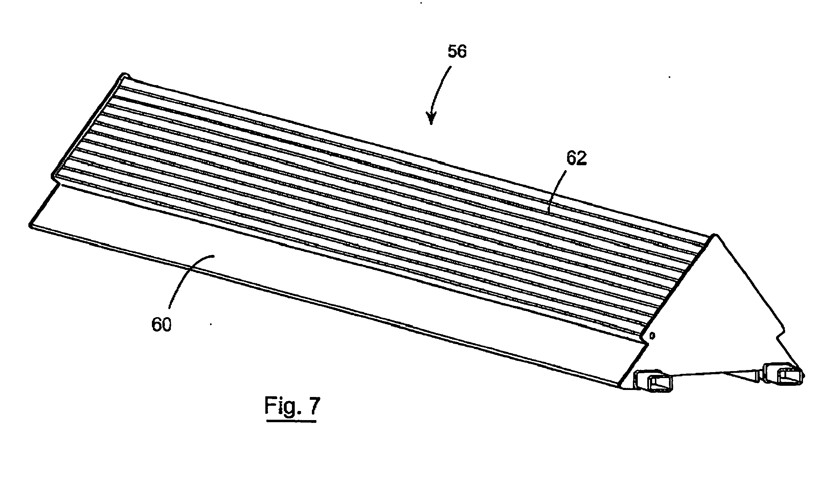

Figure 7 illustrates a perspective view of a condenser forming part of the processing module illustrated in figures 4-6; and

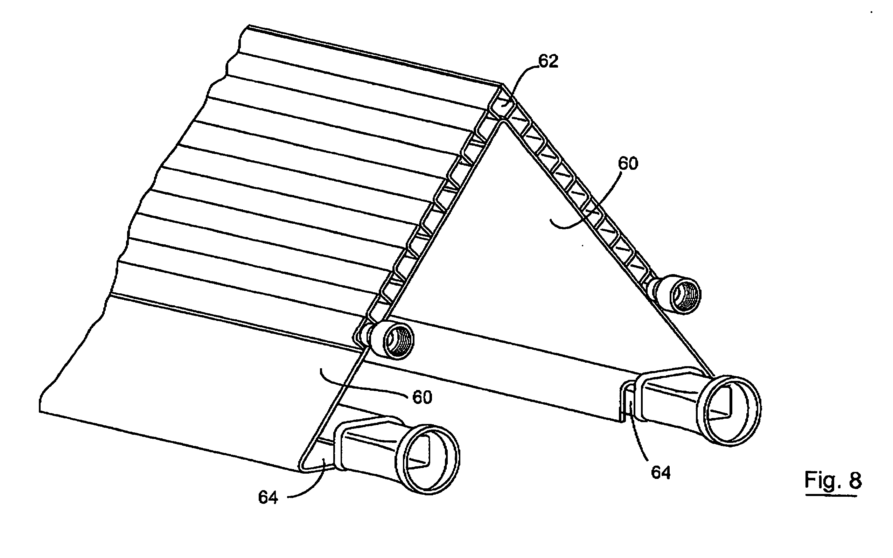

Figure 8 illustrates an enlarged end elevation of the condenser of figure 7.

### Detailed description of the drawings

Referring now to the accompanying drawings there is illustrated a pellet forming system according to a preferred embodiment of the present invention. The system is comprised of two main components which operate together, but which can, as will be appreciated from the following description, be operated independently of one another. The two main components of the system are a pellet forming apparatus (10) which physically extrudes the biomass pellets (not shown), and a biomass processing module (12) which in use is disposed upstream of the pellet forming apparatus (10). The processing module (12) is arranged to allow control and variation of the physical and/or chemical properties of the biomass in order to both reduce the power requirements in forming the pellets, and to allow increased output, reduced maintenance and improved quality of the final pellets.

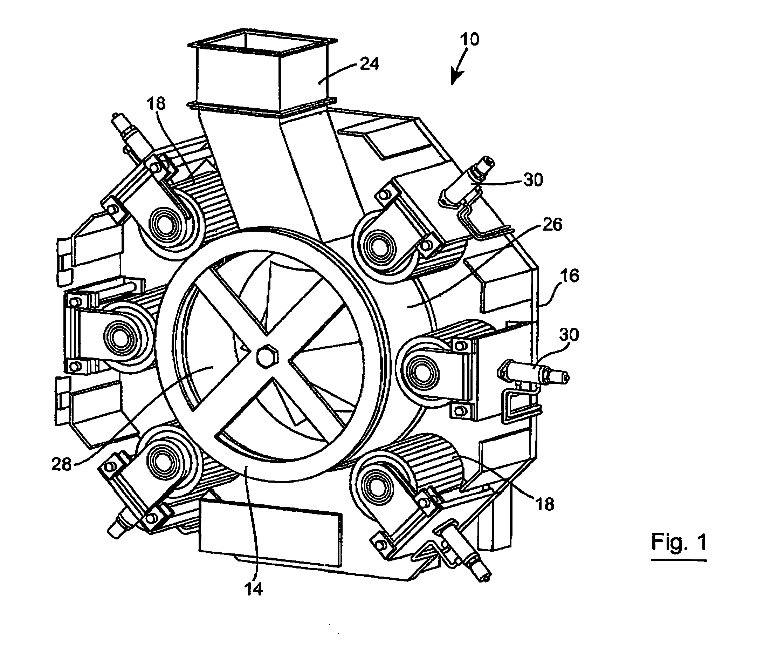

Referring in particular to figures 1-3 the pellet forming apparatus (10) is shown in isolation. The apparatus (10), in the preferred embodiment illustrated, comprises a cylindrical die (14) mounted within a frame (16), and surrounding which are six rollers (18). It will be appreciated that the number of rollers (18) may be varied as required. The rollers (18) are located to bear against and therefore apply pressure to the die (14) is order to extrude biomass therethrough in order to form the pellets. The configuration and operation of the rollers (18) is described in greater detail below. It is preferred that the rollers (18) are evenly spaced around the circumference of the die (14) is order to achieve a balanced application of pressure around the die (14). This even spacing can be achieved regardless of the number of rollers (14) present

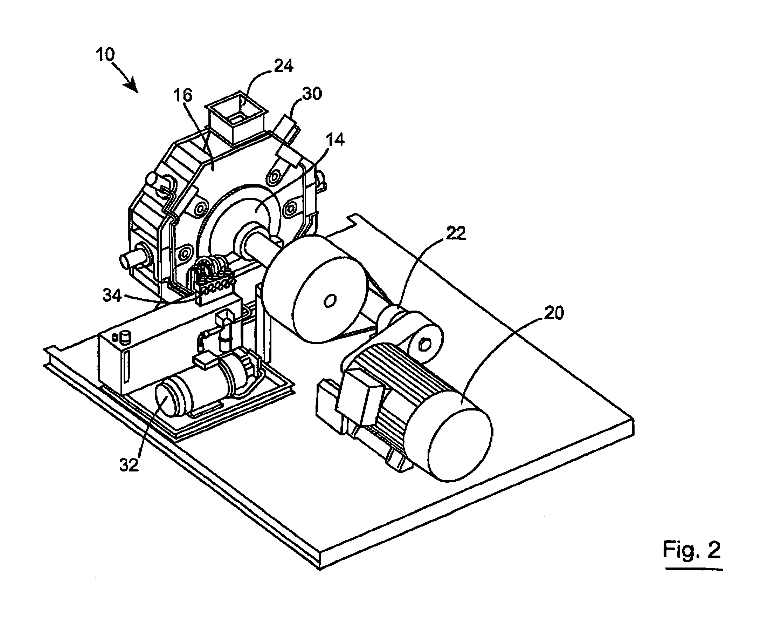

Referring to figure 2 the apparatus (10) comprises drive means in the form of a motor (20) which may be driven by any suitable means, for example electrically or hydraulically or the like, and through a gearbox (22) to effect rotation of the die (14) during use. Located above the die (14) and mounted to the frame (16) is dispensing means in the form of a chute (24) via which, during use, pulped biomass is fed to the die (14) to be pressed into pellets, as will be described in detail below.

The chute (24) delivers the biomass onto a sidewall (26) of the die (14), which sidewall (26) is reticulated, the size of the reticulations determining the dimensions of the pellets formed by the apparatus (10). In use the biomass forms a mat on the exterior of the side wall (26) during the first rotation of the die (14), following which the rollers (18) press the biomass through the reticulations in the side wall (26) as further biomass is deposited onto the sidewall (26) from the chute (24). The die (14) defines, on the interior thereof, a chamber (28) into which the pellets are deposited from the reticulations in the sidewall (26), to be collected in any suitable fashion. The detailed operation of the pellet forming process will be described in greater detail below.

In order to ensure optimum operating parameters, each of the rollers (18) is preferably independently adjustable to allow variation in the pressure applied to the sidewall (26) and the biomass deposited thereon, in order to form the pellets. Each roller (18) therefore has an independent hydraulic ram (30) associated therewith, which allows the independent displacement of each roller (18) towards or away from the sidewall (26). The hydraulic rams (30) are fed from a hydraulic pump (32) via a hydraulic manifold (34). The manifold (34) may be operated by control means (not shown) of the apparatus (10). The control means are preferably in the form of a computer program fed with data from various sensors disposed about the apparatus (10), in order to provide feedback control, and preferably closed loop feedback control, of the pressure applied by each of the rollers (18). In addition the rotational speed of the die (14) may be determined by the control means, which is preferably adapted to vary the speed of the motor (20) driving the die (14), or to vary the ratio of the gear box (22).

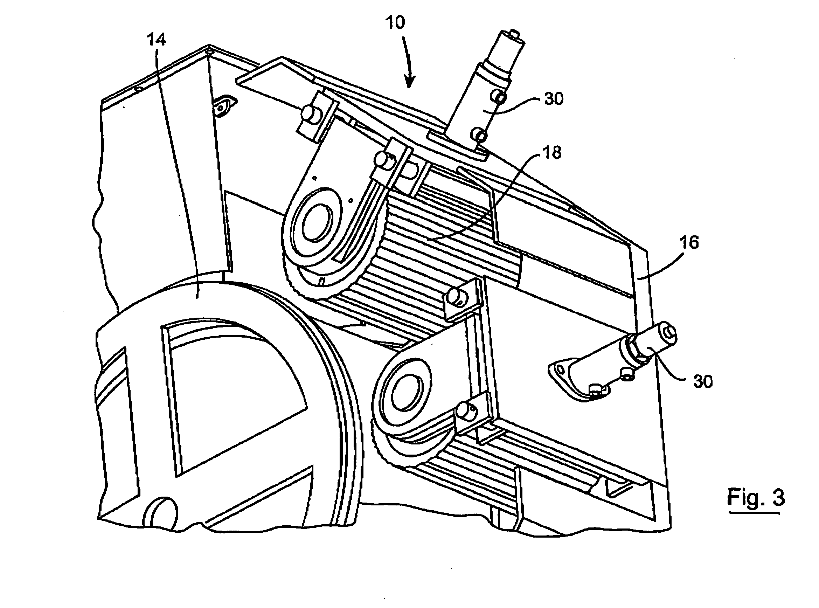

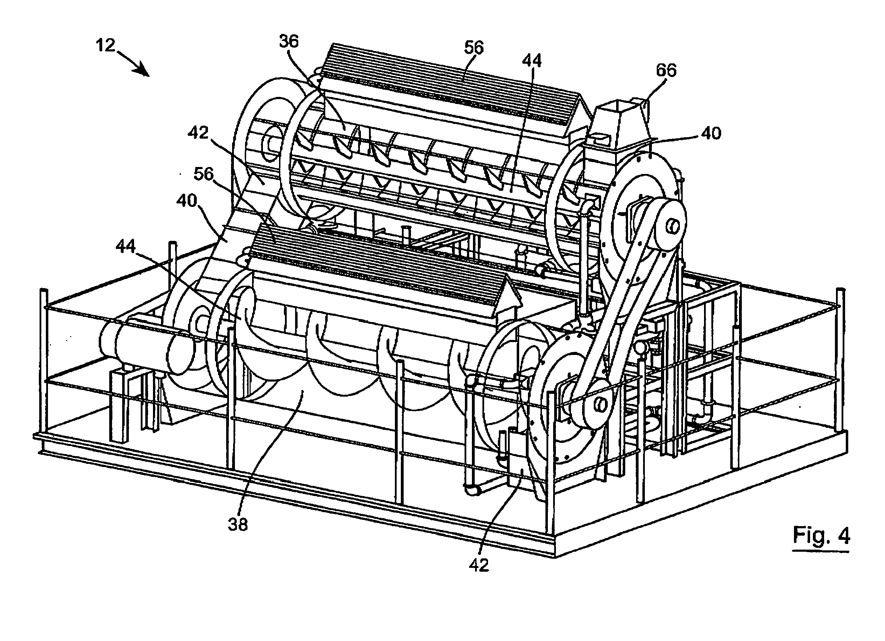

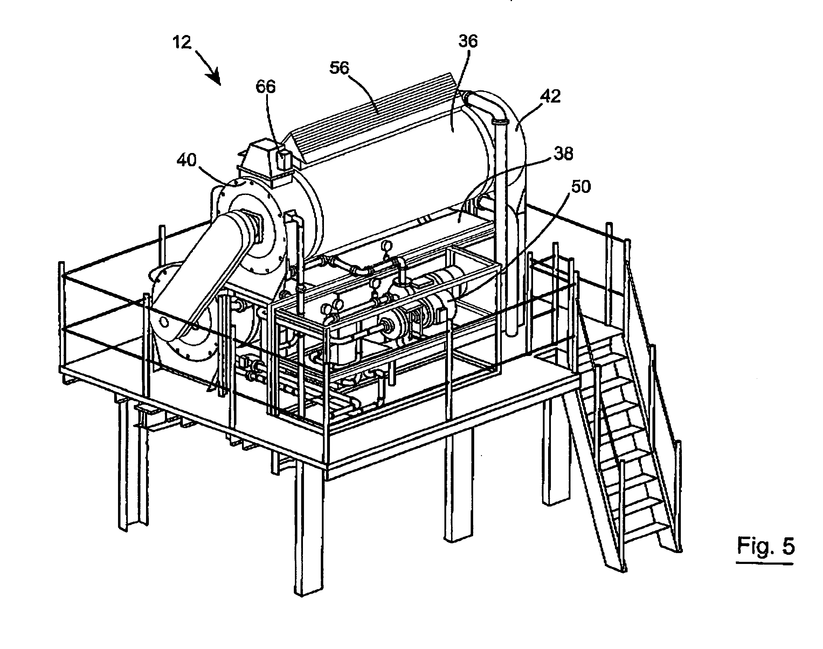

Referring now in particular to figures 3-6 the processing module (12) is shown in greater detaiL As briefly mentioned above, the processing module (12) is adapted to pre-process the biomass/wood prior to being deposited onto the die (14), in order to manipulate the chemical and/or physical properties of the biomass, in particular to allow the biomass to assist in the pellet forming process rather than relying simply on mechanical forces produced at the die (14).

Research conducted by the applicant, in particular chemical analysis of the biomass to be processes via the system of the present invention, has revealed that the natural properties present in the biomass can contribute to reduce the pressure and energy required in forming the pellets by increasing the compressibility of the pulped biomass, as will be described in detail hereinafter. In the preferred embodiment illustrated the processing module (12) is mounted directly above the pellet forming apparatus (10), such that the biomass can be displaced through the processing module (12) and then downwardly into the chute (24) feeding the die (14) of the pellet forming apparatus (10). It will however be appreciated that the processing module (12) could be located in any other suitable position relative to the pellet forming apparatus (10).

In the preferred embodiment illustrated the processing module (12) comprises a first chamber (36) and a second chamber (38) disposed in series, each chamber (36) and (38), having an inlet (40) at one end and an outlet (42) at the opposed end. The outlet (42) of the first chamber (38) feeds directly into the inlet (40) of the second chamber (38). In this way biomass/wood is displaced initially through the first chamber (36) and then through the second chamber (38) before being deposited onto the die (14). It will be appreciated that more or less than the two chambers, (36, 38) shown may be included. Each chamber (36, 38) include means for displacing biomass form the respective inlet (40) to the respective outlet (42), and in the preferred embodiment illustrated this displacing means comprises an auger (44). The dimensions of the augers (44) may vary between the first and second chambers (36, 38), in order to allow a variation in the dwell time of the biomass within each of the chambers (36, 38). In addition the type of auger (44) used may be varied, in order to for example to provide more or less mechanical agitation of the biomass.

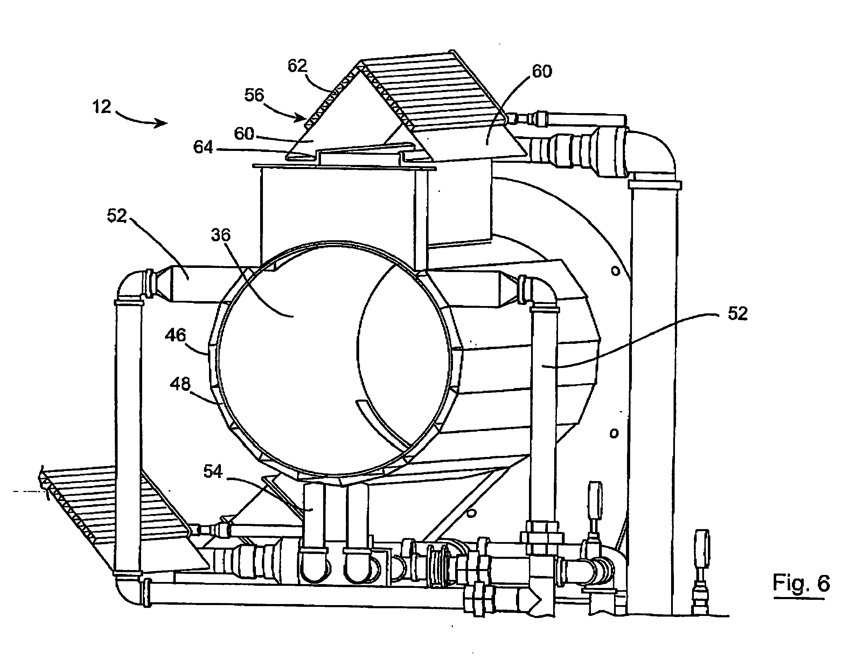

In the embodiment illustrated the processing module (12) is adapted to enable temperature control within each of the chambers (36, 38), in particular to enable the transfer of heat into the chambers (36, 38). In the preferred embodiment illustrated this is achieved by providing a heat exchanger in the form of a double walled cylinder (46) forming each of the chambers (36, 38) and between which double walls a honeycomb like cavity (48) is defined, as clearly illustrated in figure 6. In use a heat transfer medium, for example steam, heated water or oil or the like, may be pumped through the honeycomb cavity (48) around each of the chamber (36, 38) in order to vary the temperature within the chambers (36, 38). While not illustrated in figure 6, the cylinders (46) are preferably encased in a thick layer of insulation in order to ensure the maximum transfer of heat from the honeycomb cavity (48) to the interior chamber (36, 38). The heat exchanger further comprises a boiler (50) and associated piping, in particular a pair of supply pipes (52) which feed hot water or the like into the honeycomb cavity (48), and a pair of exhaust pipes (54) which withdraw the cooled water from the honeycomb cavity (48). The cooled water is passed back to the boiler (50) for reheating and re-supply into the cavity (48) via the supply pipes (52). It will be appreciated that any other heat exchange means may be provided in place of the honeycomb cavity (48). For example the heat exchanger could take the form of one or more resistive heaters such as electrical coils (not shown) mounted on or formed integrally with the wall of the cylinders (46) in order to provide heat thereto. Such heating coils could also be fitted to or formed integrally with the augers (44).

By heating the chambers (36, 38), and more particularly the biomass contained therein, the moisture contained within the biomass will be converted into vapour, which will therefore rise upwardly through the chamber (36, 38). The processing module (12) is thus provided with moisture extraction means in the form of a hood (56) mounted above an opening in the respective chamber (36, 38) which therefore enables the rising vapour to pass out of the chamber (36, 38) and rise into the hood (56). In the embodiment illustrated the hood comprise a pair of panels (60) which taper towards one another to an apex, thus forming an enclosure into which the vapour rises but cannot escape. Mounted to an exterior of the panels (60) is heat transfer means in the form of an array of conduits (62) through which a heat transfer medium for example cooled water, can be circulated. Thus the panels (60) are relatively cool, resulting in condensation of the rising vapour thereon. This condensate then migrates downwardly along each of the panels (60) into a trough (64) which forms a lower portion of the hood (56). In the preferred embodiment illustrated the condensate is directed back to the boiler (50), in order to further improve the thermal efficiency of the processing module (12). Moisture can therefore be continually drawn out of the biomass as it makes its way through each of the chambers (36, 38). The amount of moisture extraction can be controlled by varying the temperature within each chamber (36, 38) and by varying the temperature of the hood (56). The volume of liquid removed via each hood (56) may also be monitored using any suitable sensor arrangement, in order to provide feedback to the control means operating the system.

Thus by varying both the temperature within the chambers (3 6, 38) and the level of condensation by varying the temperature of the hood (56), it is possible to accurately manage both the temperature and moisture content of the biomass contained within the processing module (12). In order to monitor these parameters the processing module (12) is preferably provided with an array of sensors (not shown) disposed thereabout, and operable to measure for example temperature and/or moisture content of the biomass entering and/or within and/or leaving each chamber (36, 38). These sensors may take the form of infra-red sensors capable of measuring both temperature and moisture content. Additional sensors may also be employed to conduct a chemical analysis of the biomass. The data collected from the various sensors is then fed back to the control means in order to allow positive feedback control of the above operating parameters of the processing module (12). In the embodiment illustrated an infra-red sensor (66) is shown mounted above the inlet (40) of the first chamber (36). This sensor (66) can therefore monitor the physical and /or chemical and/or thermal characteristics of the biomass entering the first chamber (36).

Turning then to the detailed operation of the pellet forming system of the invention, biomass for example in the form of sawdust or wood shavings or the like is fed into the processing module (12) via the inlet (40) of the first chamber (36). This may be a continuous feed or an intermittent feed, and is preferably achieved via an automated feed process. The supply of biomass into the processing module (12) can therefore be implemented by the control means (not shown) of the system, allowing an increase or decrease of biomass being fed into the system in order to meet for example a particular output demand.

The biomass then enters the first chamber (36) and is displaced towards the outlet (42) via the auger (44) disposed within the first chamber (36). The speed of rotation of the auger (44), and therefore the dwell time of the biomass within the first chamber (36), is preferably determined by the control means in order to achieve desired operating parameters and/or quality of the finished pellets. The first chamber (36) is heated to a desired temperature in order to achieve certain chemical and/or physical changes to the biomass, which is monitored by various sensors (not shown) disposed about the processing module (12). In addition to heating the honeycomb cavity (48) in order to allow temperature variation of the biomass, it is also envisaged that the auger (44) may itself be heated, whether by means of a heat transfer fluid being pumped therethrough, or by alternative means, for example resistive heaters contained in or formed integrally with the auger (44). As mentioned above the auger (44) may also be adapted to effect mechanical agitation of the biomass in order to further process same in preparation for extrusion via the die (14).

Having passed along the length of the first chamber (36), the biomass will have been heated to a desired temperature, and also a desired moisture content will have been extracted therefrom. The biomass is then dispensed through the outlet (42) of the first chamber (36), and into the inlet (40) of the second chamber (38). A similar process is applied to the biomass in the second chamber (38), being passed along the length thereof by means of the auger (44) disposed therein. The temperature and moisture content can be further varied, using feedback control to monitor and implement these changes to suit the overall requirements of the system. On exiting the outlet (42) of the second chamber (38) the processed biomass is deposited into the chute (24) of the pellet forming apparatus (10). The biomass therefore falls down the chute (24) and onto the sidewall (26) of the die (14). The die (14) is rotated at a selected speed, thus drawing the biomass around the sidewall (26), to be compressed thereagainst by the array of rollers (18). On the first revolution of the die (14) the biomass is compressed into a mat on the sidewall (26), with further biomass being deposited on top of same from the chute (24). As the die (14) continues to rotate the biomass will be extruded through the reticulations in the sidewall (26) of the die (14) via pressure applied by the rollers (18). As mentioned above the rollers (18) are individually adjustable in order to vary the pressure applied thereby, and to suit the output requirements of the apparatus (10). The speed of rotation of the die (14) may also be varied to match the output from the processing module (12) in order to generate a desire pellet output

As the biomass is further extruded through the reticulations the pellets will break off under the influence of gravity and/or mechanical knives (not shown) or the like and fall into the chamber (28) defined on the interior of the die (14). The pellets can then be removed as required, either in batches or continually by any suitable means. The speed of the die (14), and the pressure applied by the rollers (18), can be varied in order to vary the output of the apparatus (10). The output requirements of the system can be inputted by an operator, whereby the control means will then alter the various operating parameters such as speed, thermal input, pressure, etc. in order to achieve the required output in the most efficient manner possible. The various sensors disposed about the system will continually relay data to the control means in order to allow careful feedback to control the operating conditions of the system.

It will be appreciated from the above description that the pellet forming apparatus (10) can operate independently of the processing module (12) and vice versa although when operating together the best results are achieved.

## Claims

1. A pellet forming system comprising a pellet forming apparatus having a substantially cylindrical die; at least one roller positioned externally of the die and engageable thereagainst; wherein one or more operating parameter of the die and/or roller is feedback controlled; and a biomass processing module upstream of the die which is adapted to process the biomass before being delivered to the die.

2. A pellet forming system according to claim 1 in which the die is rotatable about a longitudinal axis of the die and the at least one roller is rotatable about a longitudinal axis of the roller.

3. A pellet forming system according to claim 1 or 2 in which the at least one roller is displaceable towards and away from a surface of the die.

4. A pellet forming system according to any preceding claim comprising a pressure sensor associated with the at least one roller and operable to monitor the pressure applied by the roller to the surface of the die.

5. A pellet forming system according to any preceding claim comprising control means adapted to implement feedback control of the operating parameters of the apparatus.

6. A pellet forming system according to any preceding claim comprising means for dispensing biomass onto the die.

7. A pellet forming system according to any preceding claim in which the biomass processing module comprises at least one chamber having an inlet and an outlet and means for displacing biomass through the chamber from the inlet to the outlet; wherein one or more operating parameter of the processing module is feedback controlled.

8. A pellet forming system according to claim 7 in which the biomass processing module comprises at least one heat exchanger in operative association with the chamber and operable to allow temperature control of biomass within the chamber.

9. A pellet forming system according to claim 7 or 8 in which the biomass processing module comprises means for extracting moisture from within the chamber.

10. A pellet forming system according to any of claims 7 to 9 in which the biomass processing module comprises at least one sensor operable to monitor one or more physical and/or chemical properties of biomass entering and/or within and/or exiting the chamber.

11. A pellet forming system according to claim 9 or 10 in which the extracting means comprises a condenser in fluid communication with the chamber.

12. A pellet forming system according to any of claims 7 to 11 in which the chamber is defined by a double walled cylinder between which walls a heat transfer medium may be circulated in order to effect temperature control of the biomass.

13. A pellet forming system according to claim 11 or 12 in which the chamber includes an opening in an upper portion thereof which communicates with the condenser.

14. A pellet forming system according to any of claims 10 to 13 in which data from the or each sensor is utilised to effect closed loop feedback control of one or more of the operating parameters of the processing module.

15. A pellet forming system according to any of claims 8 to 14 in which the moisture extracting means comprises a hood disposed above the chamber, an array of heat exchange pipes in thermal contact with the hood and through which a heat exchange medium can circulate, and a water runoff circuit adapted to remove condensed water from the hood.
